(19) **Europäisches Patentamt**

**European Patent Office**

**Office européen des brevets**

(11) Veröffentlichungsnummer: **0 229 880 B1**

(12) # EUROPÄISCHE PATENTSCHRIFT

(45) Veröffentlichungstag der Patentschrift: **02.01.92**

(21) Anmeldenummer: **86113599.4**

(22) Anmeldetag: **02.10.86**

(51) Int. Cl.⁵: **H01F 7/18**, H01H 47/32, F01L 9/04

(54) **Verfahren und Schaltung zur periodischen Ansteuerung eines Elektromagneten.**

(30) Priorität: **05.12.85 DE 3543017**

(43) Veröffentlichungstag der Anmeldung:
**29.07.87 Patentblatt 87/31**

(45) Bekanntmachung des Hinweises auf die
Patenterteilung:
**02.01.92 Patentblatt 92/01**

(84) Benannte Vertragsstaaten:
**DE ES FR GB IT SE**

(56) Entgegenhaltungen:
**DE-A- 2 251 472**
**DE-A- 2 513 043**
**DE-A- 2 532 715**
**DE-A- 2 828 678**
**DE-A- 3 423 505**

(73) Patentinhaber: **AUDI AG**
**Auto-Union-Strasse 1 Postfach 220**
**W-8070 Ingolstadt(DE)**

(72) Erfinder: **Der Erfinder hat auf seine Nennung verzichtet**

(74) Vertreter: **Le Vrang, Klaus**
**AUDI AG Postfach 220 Patentabteilung I/EXA**
**W-8070 Ingolstadt(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Verfahren zur periodischen Ansteuerung eines Elektromagneten sowie eine Schaltung zur Durchführung des Verfahrens.

Es ist bekannt, daß ein Elektromagnet zum Anziehen des Ankers einen höheren Strom braucht als zum anschließenden Halten des Ankers. Es ist dementsprechend zur Energieabsenkung möglich, den Elektromagneten mit einem höheren Fangstrom und anschließend, nach Auftreffen des Ankers, mit einem niedrigen Haltestrom zu versorgen.

Die Erfindung befaßt sich insbesondere mit einem derartigen Verfahren, bei dem im Arbeitsbetrieb der Elektromagnet wiederholt derartige Einfang- und Haltevorgänge durchführen muß, wobei jeweils eine Periode von einer Fangstromphase und einer anschließenden Haltestromphase umfaßt wird.

Ein derartiges Anwendungsgebiet ist die Ansteuerung der Gaswechselventile einer Brennkraftmaschine von der Öffnungs- in die Schließposition und umgekehrt durch Elektromagnete, während der Wechsel von den beiden Endstellungen des Gaswechselventiles jeweils durch eine Federbeaufschlagung stattfindet. Ein derartiges System ist in der DE-A 30 24 109 offenbart.

Als problematisch für den Energiehaushalt erweist sich dabei, daß, um das sichere Anziehen des Ankers zum vorbestimmten Zeitpunkt zu garantieren, der Einschaltzeitpunkt sicherheitshalber so gewählt werden muß, daß die Einfangstromstärke auch bei langsamem Stromanstieg gewährleistet ist. Dabei gehen Randbedingungen wie unterschiedliche Temperatur und unterschiedliche Versorgungsspannung, Seriensteuerung, Änderung über die Laufzeit etc. ein, alles Werte, die bei dem Betrieb einer Brennkraftmaschine nicht vernachlässigt werden können, da zum einen naturgemäß die Spannung im Bordnetz eines Kraftfahrzeuges starken Schwankungen unterworfen ist, und andererseits die Temperatur einer Brennkraftmaschine in der Warmlaufphase deutlich unterschiedlich ist gegenüber der Betriebstemperatur. Somit findet, um auch bei extremen Bedingungen ein sicheres Funktionieren zu gewährleisten, eine energieverzehrende Sicherheitsreserve Anwendung.

Aufgabe der Erfindung ist es, ein Verfahren zum Ansteuern der Elektromagnete anzugeben, mit Hilfe dessen die unterschiedlichen Schalteigenschaften aufgrund veränderter Induktivität des Magneten Berücksichtigung finden.

Die Aufgabe wird gelöst durch den Hauptanspruch.

Eine zur Durchführung dieses Verfahrens geeignete Schaltung ist in den Ansprüchen 7 und 8 angegeben.

Erfindungsgemäß ist vorgesehen, daß der zeitliche Stromverlauf während der Fangstromphase oder nach dem Einfangen des Ankers ausgewertet wird und der daraus ermittelte Wert dazu dient, in der nächsten Periode ggf. den Fußpunkt der Einschaltkurve zu verschieben, um eine entsprechende Korrektur zu erhalten.

Dabei bietet es sich an, den Stromanstieg zur Auswertung heranzuziehen, da vom Stromanstieg der exakte Fußpunkt abhängt. Es ist jedoch auch ohne Nachteil möglich, den Stromabfall durch den Magneten, der mit einer Freilaufschaltung versehen ist zur Auswertung heranzuziehen, hierdurch jedoch wird in erster Linie eine Temperaturkompensastion, weniger eine Kompensation von unterschiedlicher Betriebsspannung erreicht.

Zur Durchführung der Auswertung gibt es prinzipiell zwei Möglichkeiten: Eine Möglichkeit ist, daß innerhalb eines vorbestimmten Zeitintervalls, dessen Beginn günstigerweise mit dem Fußpunkt der Kurve zusammengelegt werden kann, ermittelt wird, bis auf welchen Wert am Ende des Zeitintervalls die Stromstärke angestiegen ist. Der erreichte Wert der Stromstärke ist ein Maß für die Einstiegsgeschwindigkeit.

Alternativ dazu kann die Zeit gemessen werden, die jeweils benötigt wird, um einen bestimmten Stromwert zu erreichen. In diesem Falle ist die ermittelte Zeit das Maß für die Steilheit des Stromanstiegs.

In beiden Fällen wird die Zeitspanne, die der Einschaltzeitpunkt des Stromes vorhalten muß, um zum gewünschten Zeitpunkt den Anker zuverlässig einzufangen, durch den aus der Stromverlaufskurve ermittelten Wert exakt festgelegt, bei einem sehr starken Stromanstieg kann der Einschaltzeitpunkt näher an den Einfangzeitpunkt herangeschoben werden, bei einem langsamen Stromanstieg muß der Einschaltzeitpunkt in Richtung früh verlegt werden.

Weiterhin wird erfindungsgemäß eine Schaltung zur Durchführung des Verfahrens angegeben, diese Schaltung sieht zwei Zeitglieder vor. Das zweite Zeitglied wird verwendet zum Ausmessen der Stromvelaufskurve, entweder, indem mit ihm die Zeitinformation abgefragt wird, innerhalb derer eine vorgegebener Schwellwert erreicht wird, oder aber, indem dieses Zeitglied ein bestimmtes Zeitintervall definiert, innerhalb dessen die Größe des Stromanstiegs gemessen wird. Dieser Korrekturwert, der sich aus dem Zusammenwirken dieses Zeitgliedes sowie der Strommessung ergibt, wird agespeichert, um vor Beginn der nächsten Periode dem ersten Zeitglied zugeführt zu werden, das aus diesem Korrekturwert einen Zeitwert ableitet, der den zeitlichen Abstand des Einschaltstromes von einem vorgegebenen festen Signalpunkt bestimmt.

Im folgenden wird die Erfindung anhand der Zeichnung im Detail erläutert. Es zeigen:

Fig. 1    ein Blockschaltbild zur Durchführung des Verfahrens;

Fig. 2    eine Signaldiagramm zur Erläuterung des erfindungsgemäßen Verfahrens; und

Fig. 3    ein Signaldiagramm zur Erläuterung einer weiteren Ausführungsform des erfindungsgemäßen Verfahrens.

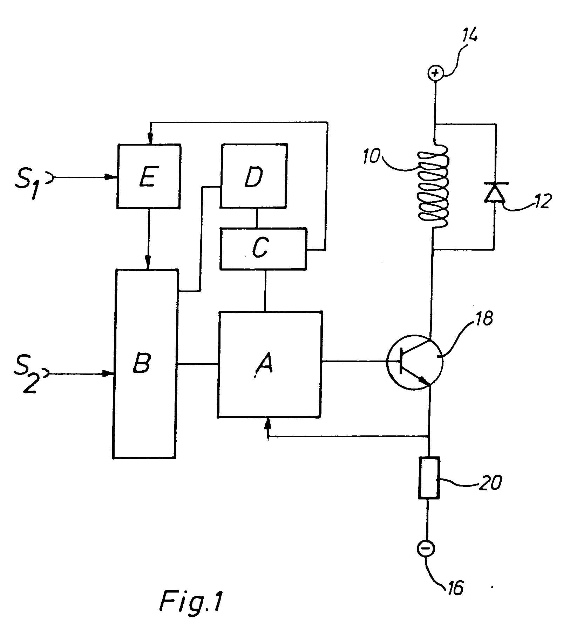

In Fig. 1 ist ein Elektromagnet 10 dargestellt, dem parallel geschaltet ist eine Freilaufschaltung, die durch eine Diode 12 angedeutet ist. Der eine Anschluß des Elektromagneten 10 liegt plusseitig an positiver Spannungsversorgung 14, der andere Anschluß ist über einen Meßwiderstand 20 und ein Stromsteuerelement 18, hier angedeutet durch einen Transistor, an den Masseanschluß 16 gelegt. Der Widerstand 20 dient als Meßwiderstand, über dem eine Information über die Stromstärke abgegriffen wird. Diese Information über die Stromstärke wird einer Abfrageschaltung A zugeführt, die gleichzeitig das Stromsteuerelement 18 ansteuert. Die Abfrageschaltung A ist mit einer Logikschaltung B verbunden, die insbesondere der Abfrageschaltung A den Zeitpunkt zur Ansteuerung des Stromsteuerelementes 18 vorgibt.

Die Logikschaltung B wird von einem ersten Zeitsteuerglied E angesteuert, das Zeitsteuerglied E gibt eine Zeitperiode vor, mit deren Ablauf die Logikschaltung B über die Abfrageschaltung A das Stromsteuerelement 18 öffnet. Das erste Zeitglied E erhält ein Signal S1, das das Zeitglied E jeweils startet.

Die Abfrageschaltung A ist mit einem Speicher C verbunden, dieser Speicher C gibt seine Informationen einerseits an das erste Zeitglied E, andererseits ist der Speicher mit einem zweiten Zeitglied D verbunden, das ebenfalls mit der Logikschaltung B in Verbindung steht.

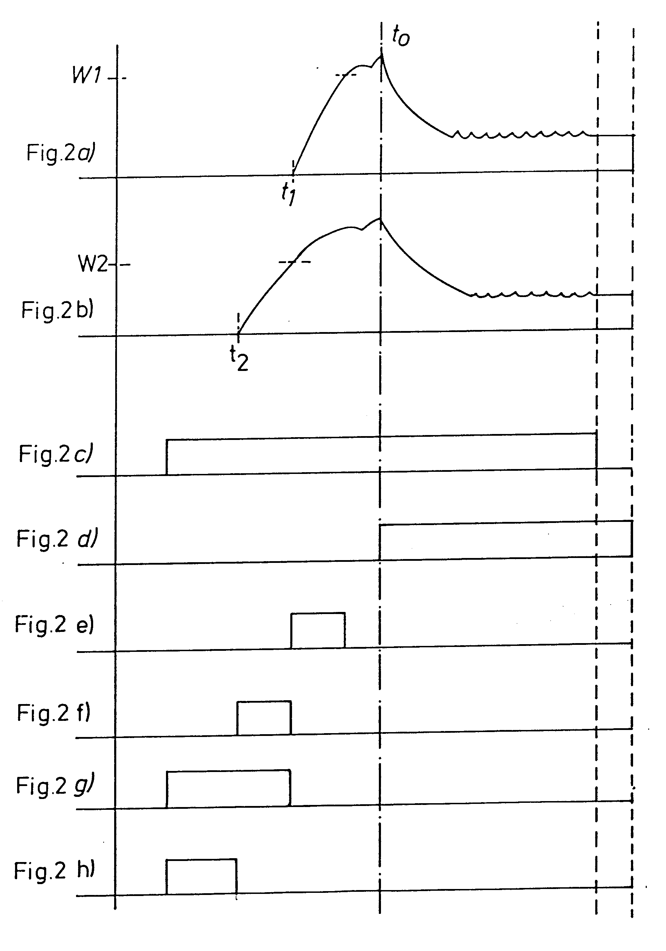

Der Zeitpunkt zum Einschalten des Elektromagneten 10 wird wie folgt festgelegt: Ein Signal S1 wird an das Zeitglied E geliefert, dieses Signal ist in Fig. 2c dargestellt. Mit dem Eintreffen des Signales S1 beginnt das Zeitglied E zu starten und liefert ein Signal, wie es beispielsweise in Fig. 2g dargestellt ist. Die rückwärtige Flanke dieses Zeitsignals definiert den Zeitpunkt $t_1$, zu dem die Logikschaltung B über die Abfrageschaltung A das Stromsteuerelement 18 öffnet, worauf der Einschaltstrom durch den Magneten 10 fließt, wie es in Fig. 2a dargestellt ist. Der Einschaltstrom läuft bis zu einem Zeitpunkt $t_0$, zu diesem Zeitpunkt trifft der Anker auf und wird eingefangen, und damit ist die Einfangphase sicher abgeschlossen. In der Regel ist das direkte Auftreffen des Ankers auf den Magneten durch einen kurzzeitigen Stromabfall aufgrund der Induktivitätsänderung des Magneten bei auftreffendem Anker zu erkennen und dementsprechend auch in Fig. 2a angedeutet.

Erfindungsgemäß wird während dieser Einschaltphase die Stromstärke gemessen und der Spannungsabfall der Schaltung A zugeführt. Gleichzeitig läuft mit dem Einschalten das zweite Zeitglied D an, wie es in der Fig. 2e dargestellt ist. Mit der rückwärtigen Flanke dieses Signals 2e wird der zu diesem Zeitpunkt in der Stromabfrageschaltung A vorliegende Wert der Stromstärke festgehalten, er ist in Fig. 2a mit W1 angedeutet, und in den Speicher C eingeschrieben.

Der weitere Signalverlauf ist nicht erfindungswesentlich, mit dem Zeitpunkt $t_0$ startet das in Fig. 2d dargestellte Signal S2, das die Logikschaltung B ansteuert, und während der Haltephase sind im wesentlichen die Signale S1 und S2 vorhanden. Kurz vor Ende der Haltephase wird das Signal S1 ausgeblendet, wodurch die Logikschaltung B veranlaßt wird, von getakteten Stromversorgung, in der dem Freilauf 12 immer nur kurzzeiting Stromstöße zugeführt werden, in eine Konstantstromphase überzugehen, um von einem definierten Stromwert mit Beendigung des Signales S2 auf den Wert 0 abzufallen und den Magneten abzuschalten, so daß der Anker freigegeben wird.

Erfindungswesentlich ist, daß vor Beginn der nächsten Periode das erste Zeitglied E den in den Speicher C eingeschriebenen Wert abfragt und seine von ihm abzugebende Zeitpanne, die in Fig. 2g dargestellt ist, von dem Wert im Speicher C über eine vorgegebene Kennlinie ableitet.

Ist z. B. der Stromverlauf wie in Fig. 2b dargestellt, sehr viel langsamer gewesen, sei es aufgrund einer höheren Betriebstemperatur oder aufgrund einer niedrigeren Versorgungsspannung, wird, wie oben beschrieben, während des von dem zweiten Zeitglied D abgegebenen Zeitintervalls 2f, das mit dem Einschaltzeitpunkt $t_2$ zu laufen beginnt, die Stromstärke gemessen, die in diesem Fall am Ende des von dem zweiten Zeitglied D definierten Zeitintervalls einen Wert W2 erreicht hat, der niedriger als der Wert W1 ist.

Für die nächste Periode bestimmt sich die von dem ersten Zeitglied D abzugebende Zeitsignallänge nunmehr nach dem Wert W2, dieses Signal wird dementsprechend kürzer, da der Einschaltzeitpunkt vorverlegt werden muß.

Dementsprechend startet das erste Zeitglied E mit Erhalt des Signales S1, das in 2c dargestellt ist, sein Signal, das nun, entsprechend dem Wert W2, in Fig. 2h dargestellt ist und deutlich kürzer ist als das in Fig. 2g dargestellte aus der vorherigen Periode. Auf diese Weise startet nunmehr der Einschaltstrom der nachfolgenden Periode zu dem früheren Zeitpunkt $t_2$.

Wie eingangs erwähnt, ist die Anwendung für diese Erfindung die Beschaltung eines Gaswechselventils einer Brennkraftmaschine. Damit finden in jeder Sekunde mehrere Schaltvorgänge statt, wohingegen die die Steilheit des Einschaltstromes beeinflussenden Parameter sich im Vergleich nur sehr langsam ändern, so daß die Korrektur nicht auf plötzliche Änderungen reagieren muß. Es wird jedoch eine einfache Möglichkeit geschaffen, die sehr unterschiedlichen Betriebsvoraussetzungen geeignet zu korrigieren und bei minimalem Stromenergieverbrauch eine stets exakte Einhaltung des Öffnungs-und Schließzeitpunktes zu gewährleisten.

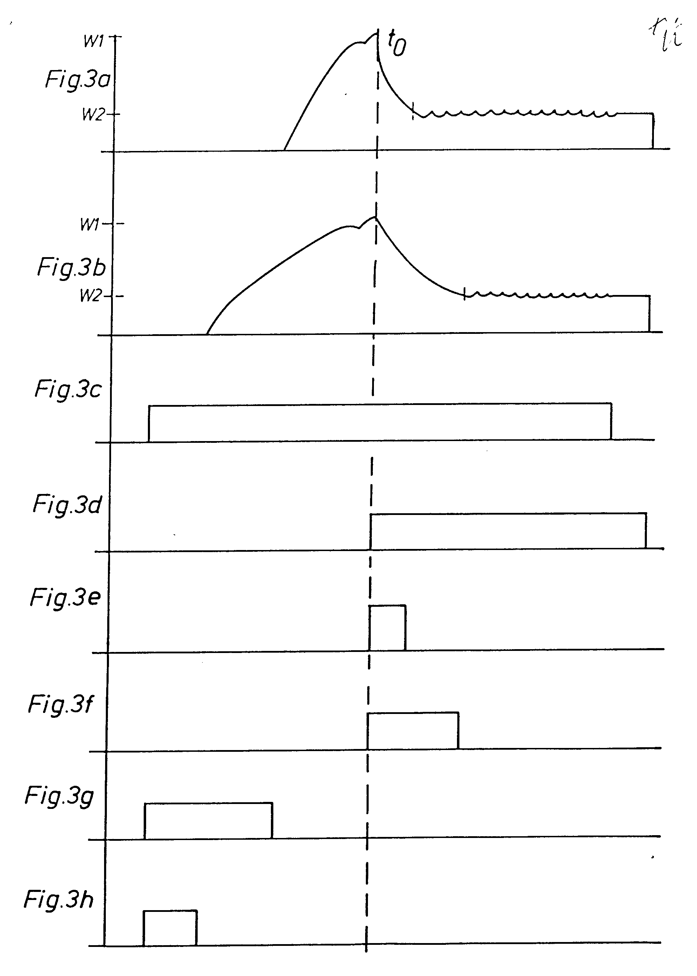

Eine Alternative der Erfindung ist in Fig. 3 dargestellt. Fig. 3a zeigt entsprechend Fig. 2a das Stromprofil eine Fangstromphase und einer Haltestromphase. Die Auswertung der Stromverlaufskurve beginnt dabei mit dem Abschalten des Fangstromes.

Es wird keine feste Zeitspanne vorgegeben, innerhalb derer die Stromstärke gemessen wird, sondern es wird die Zeitdauer ermittelt, die notwendig ist, bis der Strom von einem ersten Wert W1 auf den Wert eines zweiten Wertes W2 gelangt ist. Diese Zeitspanne, die das Stromverlaufsprofil nach Fig. 3a benötigt hat, ist in Fig. 3e als Signal dargestellt. Dieses Signal, das durch die zweite Zeitschaltung D ermittelt wird, wird in den Speicher C eingeführt und dient der Definition der Zeitspanne im ersten Zeitglied E gemäß Fig 3g. Um den Strom im Freilauf messen zu können, muß ein dem Meßwiderstand 20 entsprechender Widerstand in den Freilauf verlegt werden.

Fig. 3c zeigt wiederum das Einschaltsignal S1, das gleichzeitig das Zeitglied E startet und Fig. 3g zeigt das Zeitsignal des ersten Zeitgliedes E bei verhältnismäßig steilem Stromanstieg.

Findet jedoch ein langsamer Stromanstieg gemäß Fig. 2b statt, benötigt auch der Stromabfall von dem Wert W1 auf den Wert W2 einen längeren Zeitraum, womit in den Speicher C ein Signal eingeschrieben wird, das dem in Fig. 3f dargestellten entspricht. Dieser Korrekturwert geht in die nächste Periode ein, so daß das Zeitglied E bei der nächsten Periode nunmehr ein Zeitsignal wie in Fig. 3h dargestellt abgibt, so daß der Zeitpunkt, mit dem das Stromsteuerglied 18 geöffnet wird, in Richtung früh vorverlegt wird.

Es versteht sich von selbst, daß das Strommeßverfahren, wie es nach Fig. 2 beschrieben worden ist, auch in die abfallende Flanke des Fangstromes verlegt werden kann, während umgekehrt das Verfahren nach Fig. 3 auch in der ansteigenden Flanke der Fangstromphase vorgenommen werden kann.

**Patentansprüche**

1. Verfahren zur periodischen Ansteuerung eines Elektromagneten, wobei eine Periode jeweils aus einer Fangstromphase, einer anschließenden Haltestromphase, und einer Phase, in der kein Strom durch den Elektromagneten läuft und der Anker freigegeben wird, besteht, dadurch gekennzeichnet, daß man während der Fangstromphase die Stromverlaufskurve zumindest über einen Teil der Fangstromphase die Steilheit des Stromanstiegs bestimmt, und abhängig von dem dabei ermittelten Wert den Einschaltpunkt der Fangstromphase in der nachfolgenden Periode verschiebt, in der Weise, daß bei einem starken Stromanstieg der Einschaltpunkt näher an den Einfangzeitpunkt herangeschoben wird und bei einem langsamen Stromanstieg der Einschaltzeitpunkt in Richtung früh verlegt wird.

2. Verfahren nach Anspruch 1, dadurch gekennzeichnet, daß man die Auswertung der Stromverlaufskurve während des Stromanstiegs vornimmt.

3. Verfahren nach Anspruch 1 oder 2, dadurch gekennzeichnet, daß man zur Auswertung der Stromverlaufskurve den Betrag der Änderung der Stromstärke innerhalb eines vorbestimmten Zeitintervalles erfaßt.

4. Verfahren nach einem der Ansprüche 1 bis 3, dadurch gekennzeichnet, daß das Zeitintervall mit dem Einschaltzeitpunkt der Fangstromphase beginnt.

5. Verfahren nach Anspruch 1 oder 2, dadurch gekennzeichnet, daß zur Auswertung der Stromverlaufskurve die Zeitdauer bis zur Erreichung eines Schwellwertes ermittelt wird.

6. Verfahren zur periodischen Ansteuerung eines Elektromagneten, wobei eine Periode jeweils aus einer Fangstromphase, einer anschließenden Haltestromphase, und einer Phase, in der kein Strom durch den Elektromagneten läuft und der Anker freigegeben wird, besteht, dadurch gekennzeichnet, daß man ab Beginn der Haltestromphase die Stromverlaufskurve zumindest über einen Teil der Haltestromphase die Steilheit des Stromabfalls bestimmt, und abhängig von dem dabei ermittelten Wert den Einschaltpunkt der Fangstromphase in der nachfolgenden Periode verschiebt, in der Weise, daß bei einem starken Stromabfall der Einschaltpunkt näher an den Einfangzeitpunkt herangeschoben wird und bei einem langsamen Stromabfall der Einschaltzeitpunkt in Richtung früh verlegt wird.

7. Schaltung zur Durchführung des Verfahrens nach einem der Ansprüche 1 bis 6, mit

- einem Elektromagneten (10),
- einer Logikschaltung (B), die den Stromfluß durch den Magneten (10) unter Berücksichtigung externen Ansteuersignale steuert,
- einer Abfrageschaltung (A) für die durch den Elektromagneten fließende Stromstärke,
- einem ersten variablen Zeitglied (E), das die Logikschaltung (B) zur exakten Festlegung des Einschaltpunktes der Fangstromphase ansteuert,
- einem zweiten Zeitglied (D), das mit der Abfrageschaltung (A) verbunden ist und zur Messung der Stromstärkenänderungsgeschwindigkeit dient, und
- einem Speicher (C), der den Wert der Abfrageschaltung (A) speichert und in der nachfolgenden Periode an die Logikschaltung (B) ausgibt.

8. Schaltung zur Durchführung des Verfahrens nach Anspruch 1 bis 4 und 6,

- einem Elektromagneten (10),
- einer Logikschaltung (B), die den Stromfluß durch den Magneten (10) unter Berücksichtigung externen Ansteuersignale steuert,
- einer Abfrageschaltung (A) für die durch den Elektromagneten fließende Stromstärke,
- einem ersten variablen Zeitglied (E), das die Logikschaltung (B) zur exakten Festlegung des Einschaltpunktes der Fangstromphase ansteuert,
- einem zweiten Zeitglied (D), das mit der Abfrageschaltung (A) verbunden ist und zur Messung der Stromstärkenänderungsgeschwindigkeit dient, und
- einem Speicher (C), der den Wert der Abfrageschaltung (A) speichert und in der nachfolgenden Periode an die Logikschaltung (B) ausgibt,

wobei das zweite Zeitglied (D) eine feste Zeitspanne definiert, an deren Ende die Abfrageschaltung (A) angesteuert wird und der dort angegebene Wert der Stromstärke in einen Speicher (C) übertragen wird.

9. Schaltung zur Durchführung des Verfahrens nach Anspruch 1 und 2 und 5 und 6, mit

- einem Elektromagneten (10),
- einer Logikschaltung (B), die den Stromfluß durch den Magneten (10) unter Berücksichtigung externen Ansteuersignale steuert,
- einer Abfrageschaltung (A) für die durch den Elektromagneten fließende Stromstärke,
- einem ersten variablen Zeitglied (E), das die Logikschaltung (B) zur exakten Festlegung des Einschaltpunktes der Fangstromphase ansteuert,
- einem zweiten Zeitglied (D), das mit der Abfrageschaltung (A) verbunden ist und zur Messung der Stromstärkenänderungsgeschwindigkeit dient, und
- einem Speicher (C), der den Wert der Abfrageschaltung (A) speichert und in der nachfolgenden Periode an die Lögikschaltung (B) ausgibt,

wobei das zweite Zeitglied (D) zur Zeitmessung bis zum Erreichen eines Schwellwertes der Stromstärke eingesetzt wird, und die ermittelte Zeit in einen Speicher (C) übertragen wird.

10. Schaltung nach Anspruch 8 oder 9, dadurch gekennzeichnet, daß der im Speicher (C) enthaltene Wert in der nachfolgenden Periode das durch das erste Zeitglied (E) definierte Zeitintervall beeinflußt.

**Claims**

1. A process for the periodic triggering of an electromagnet, wherein a period consists of a attraction current phase, a subsequent holding current phase and a phase in which no current flows through the electromagnet and the armature is released, characterised in that during the attraction current phase the current behaviour curve over at least a part of the attraction current phase determines the rate of rise of the increase in current, and displaces the switch-on position of the attraction current phase in the subsequent period depending on the value thus determined, so that for a rapid current increase the switch-on position is displaced nearer to the time of capture, and for a slow current increase the switch-on time is set earlier.

2. A process according to Claim 1, characterised in that the current behaviour curve is evaluated during the increase in current.

3. A process according to Claim 1 or 2, characterised in that the extent of alteration of the current strength within a predetermined time interval is recorded for the evaluation of the current behaviour curve.

4.  A process according to any one of Claims 1 to 3, characterised in that the time interval commences with the time of switch-on of the attraction current phase.

5.  A process according to Claims 1 or 2, characterised in that the length of time until the attainment of a threshold value is determined for the evaluation of the current behaviour curve.

6.  A process for the periodic triggering of an electromagnet, wherein a period consists of a attraction current phase, a subsequent holding current phase and a phase in which no current flows through the electromagnet and the armature is released, characterised in that the current behaviour curve over at least a part of the holding current phase determines the rate of current decrease from the start of the holding current phase, and displaces the time of switch-on of the attraction current phase in the subsequent period depending on the value thus determined, so that for a rapid decrease in current the time of switch-on is displaced nearer to the time of capture, and for a slow decrease in current the time of switch-on is set earlier.

7.  A circuit for carrying out the process according to any one of Claims 1 to 6, with

    -   an electromagnet (10),
    -   a logic circuit (B) which controls the current flow by means of the magnet (10) with reference to external trigger signals,
    -   an inquiry circuit (A) for the current strength flowing through the electromagnet,
    -   a first variable time function element (E), which triggers the logic circuit (B) for the exact determination of the time of switch-on of the attraction current phase,
    -   a second time function element (D), which is connected to the inquiry circuit (A) and serves to measure the rate of alteration of the current strength, and
    -   a memory (C), which stores the value from the inquiry circuit (A) and sends it to the logic circuit during the subsequent period.

8.  A circuit for carrying out the process according to any one of Claims 1 to 4 and 6, with

    -   an electromagnet (10),

    -   a logic circuit (B) which controls the current flow by means of the magnet (10) with reference to external trigger signals,
    -   an inquiry circuit (A) for the current strength flowing through the electromagnet,
    -   a first variable time function element (E), which triggers the logic circuit (B) for the exact determination of the time of switch-on of the attraction current phase,
    -   a second time function element (D), which is connected to the inquiry circuit (A) and serves to measure the rate of alteration of the current strength, and
    -   a memory (C), which stores the value from the inquiry circuit (A) and sends it to the logic circuit during the subsequent period,

    wherein the second time function element (D) defines a fixed time interval, at the end of which the inquiry circuit is triggered and the value of the current strength given by it is transferred to a memory (C).

9.  A circuit for carrying out the process according to any one of Claims 1 and 2 and 5 and 6, with

    -   an electromagnet (10),
    -   a logic circuit (B) which controls the current flow by means of the magnet (10) with reference to external trigger signals,
    -   an inquiry circuit (A) for the current strength flowing through the electromagnet,
    -   a first variable time function element (E), which triggers the logic circuit (B) for the exact determination of the time of switch-on of the attraction current phase,
    -   a second time function element (D), which is connected to the inquiry circuit (A) and serves to measure the rate of alteration of the current strength, and
    -   a memory (C), which stores the value from the inquiry circuit (A) and sends it to the logic circuit during the subsequent period,

    wherein the second time function element (D) is used to measure the time until the attainment of a current strength threshold, and the time which is determined is transferred to a memory (C).

10. A circuit according to Claim 8 or 9, characterised in that the value contained in the memory (C) affects the time interval defined by the first time function element (E), during the subsequent period.

## Revendications

1. Procédé pour l'excitation périodique d'un électro-aimant, dans lequel une période se compose chaque fois d'une phase de courant d'attraction, d'une phase de courant de maintien qui lui fait suite, et d'une phase pendant laquelle aucun courant ne passe dans l'électro-aimant et où l'armature est libérée, caractérisé en ce que l'on détermine, pendant la phase de courant d'attraction, la courbe caractéristique du courant sur au moins une partie de la phase de courant d'attraction et la vitesse de montée du courant, et en ce qu'on décale, en fonction de la valeur alors déterminée, le point de départ de la phase du courant d'attraction dans la période suivante, de telle manière que, pour une forte montée de courant, le point de départ est ramené plus près du point de collage et que, pour une montée de courant lente, le point de départ est décalé dans le sens de l'avance.

2. Procédé suivant la revendication 1 caractérisé en ce qu'il procède à l'évaluation de la courbe caractéristique du courant pendant la montée du courant.

3. Procédé suivant la revendication 1 ou 2, caractérisé en ce que, pour l'évaluation de la courbe caractéristique du courant, on prend la valeur de la variation d'intensité à l'intérieur d'un intervalle de temps prédéterminé.

4. Procédé suivant l'une quelconque des revendications 1 à 3, caractérisé en ce que l'intervalle de temps commence avec le point de départ de la phase de courant d'attraction.

5. Procédé suivant la revendication 1 ou 2, caractérisé en ce que, pour l'évaluation de la courbe caractéristique du courant, on détermine la durée jusqu'à l'obtention d'une valeur seuil.

6. Procédé pour l'excitation périodique d'un électro-aimant, dans lequel une période se compose chaque fois d'une phase de courant d'attraction, d'une phase de courant de maintien qui lui fait suite, et d'une phase pendant laquelle aucun courant ne passe dans l'électro-aimant et où l'armature est libérée, caractérisé en ce qu'on détermine la courbe caractéristique du courant, à partir du début de la phase de courant de maintien, au moins sur une partie de la phase de courant de maintien, et la pente de décroissance du courant, et en ce qu'on décale en fonction de la valeur alors déterminée le point de départ de la phase de courant d'attraction dans la période suivante, de telle manière que, pour une forte décroissance de courant, le point de départ est ramené plus près du point de collage et que, pour une décroissance plus lente le point de départ est décalé dans le sens de l'avance.

7. Circuit pour la mise en oeuvre du procédé, suivant l'une quelconque des revendications 1 à 6, comprenant
   - un électro-aimant (10),
   - un circuit logique (B), qui commande le passage du courant dans l'électro-aimant (10) en tenant compte de signaux de commande extérieurs,
   - un circuit d'échantillonnage (A) pour l'intensité du courant circulant dans l'électro-aimant,
   - une première horloge variable (E), qui commande le circuit logique (B) pour la détermination exacte du point de départ de la phase de courant d'attraction,
   - une seconde horloge (D), qui est reliée au circuit d'échantillonnage (A) et qui sert à mesurer la vitesse de variation de l'intensité, et
   - une mémoire (C), qui mémorise la valeur du circuit d'échantillonnage (A) et qui la fournit, dans la période suivante, au circuit logique (B).

8. Circuit pour la mise en oeuvre du procédé suivant la revendication 1 à 4 et 6, comprenant
   - un électro-aimant (10),
   - un circuit logique (B), qui commande le passage de courant dans l'électro-aimant (10) en tenant compte de signaux de commande extérieurs,
   - un circuit d'échantillonnage (A) pour l'intensité du courant circulant dans l'électro-aimant,
   - une première horloge variable (E), qui commande le circuit logique (B) pour la détermination exacte du point de départ de la phase de courant d'attraction,
   - une seconde horloge (D), qui est reliée au circuit d'échantillonnage (A) et qui sert à mesurer la vitesse de variation de l'intensité, et
   - une mémoire (C), qui mémorise la valeur du circuit d'échantillonnage (A) et qui la fournit dans la période suivante au circuit logique (B),

   la seconde horloge (D) définissant un laps de temps fixe, à la fin duquel le circuit d'échantillonnage (A) est commandé et la valeur de l'intensité alors indiquée est transmise à une mémoire (C).

9. Circuit pour la mise en oeuvre du procédé suivant la revendication 1 et 2 et 5 et 6, comportant
   - un électro-aimant (10)
   - un circuit logique (B), qui commande le passage de courant dans l'aimant (10) en tenant compte de signaux de commande extérieurs,
   - un circuit d'échantillonnage (A) pour l'intensité du courant circulant dans l'électro-aimant,
   - une première horloge variable (E), qui commande le circuit logique (B) pour la détermination exacte du point de départ de la phase de courant d'attraction,
   - une seconde horloge (D), qui est reliée au circuit d'échantillonnage (A) et qui sert à mesurer la vitesse de variation de l'intensité, et
   - une mémoire (C), qui mémorise la valeur du circuit d'échantillonnage (A) et qui la fournit dans la période suivante au circuit logique (B),

   la seconde horloge (D) étant mise en fonction pour le chronométrage jusqu'à l'obtention d'une valeur seuil de l'intensité, et le temps déterminé étant transmis à une mémoire (C).

10. Circuit suivant la revendication 8 ou 9, caractérisé en que la valeur contenue dans la mémoire (C) influe, dans la période suivante, sur l'intervalle de temps défini par la première horloge (E).

*Fig.1*

W1

Fig.2 a)

t₀

t₁

W2

Fig.2 b)

t₂

Fig.2 c)

Fig.2 d)

Fig.2 e)

Fig.2 f)

Fig.2 g)

Fig.2 h)

Fig.3a

Fig.3b

Fig.3c

Fig.3d

Fig.3e

Fig.3f

Fig.3g

Fig.3h